## Europäisches Patentamt
## European Patent Office
## Office européen des brevets

(11) Veröffentlichungsnummer: **0 282 803 B1**

# EUROPÄISCHE PATENTSCHRIFT

(45) Veröffentlichungstag der Patentschrift: **17.07.91**

(51) Int. Cl.5: **C09K 11/02**, C09K 11/84, G21K 4/00

(21) Anmeldenummer: **88103024.1**

(22) Anmeldetag: **29.02.88**

(54) Röntgenverstärkerfolie.

(30) Priorität: **11.03.87 DE 3707863**

(43) Veröffentlichungstag der Anmeldung:
**21.09.88 Patentblatt 88/38**

(45) Bekanntmachung des Hinweises auf die
Patenterteilung:
**17.07.91 Patentblatt 91/29**

(84) Benannte Vertragsstaaten:
**DE FR IT NL**

(56) Entgegenhaltungen:
**EP-A- 0 092 240**
**EP-A- 0 097 377**

(73) Patentinhaber: **Siemens Aktiengesellschaft**
**Wittelsbacherplatz 2**
**W-8000 München 2(DE)**

(72) Erfinder: **Knüpfer, Wolfgang, Dr.**
**Rudelsweiherstrasse 11**
**W-8520 Erlangen(DE)**

## Beschreibung

Die Erfindung betrifft eine Röntgenverstärkerfolie mit einem Substrat, auf dem ein in einem Bindemittel eingebetteter Leuchtstoff der Zusammensetzung $Gd_2O_2S{:}Tb$ aufgebracht ist und die von einem Schutzfilm abgedeckt ist.

In der EP-A-0 097 377 ist eine derartige Röntgenverstärkerfolie beschrieben, deren Leuchtstoff aus mit Terbium aktiviertem Lanthanoid-Oxidsulfid-Leuchtstoff, beispielsweise $Gd_2O_2S{:}Tb$, besteht. Um die Dispersionsfähigkeit des Leuchtstoffes zu verbessern, sind ihm hydrophobe Silika zugeführt. Eine Röntgenverstärkerfolie dieser Art emittiert grünes Licht zu einem mit ihr in Kontakt stehenden Röntgenfilm und verstärkt demgemäß die Filmbelichtung.

Der Erfindung liegt die Aufgabe zugrunde, eine Röntgenverstärkerfolie der genannten Art den Erfordernissen der Mammographie, also der fotografischen Darstellung von Weichteilen mit Hilfe von Röntgenstrahlen, anzupassen.

Diese Aufgabe ist erfindungsgemäß dadurch gelöst, daß die mittlere Korngröße der Leuchtstoffkörner zwischen 3,4 $\mu$m und 3,6 $\mu$m liegt, wobei 5 % bis 15 %, vorzugsweise 10 % der Leuchtstoffkörner größer als 6,5 $\mu$m und 85 % bis 95 %, vorzugsweise 90 % größer als 2 $\mu$m sind. Bei dieser gezielten Korngrößeneinstellung wird das ortsfeste Rauschen minimiert und die Ortsauflösung erhöht.

Eine Weiterbildung der Erfindung besteht darin, daß das Bindemittel 0,1 bis 0,2 Gewichtsprozent $SiO_2$-Partikel der Korngröße 10 bis 100 nm enthält. Dadurch wird die Agglomerierung der feinkörnigen Leuchtstoffpartikel verhindert, was sich in einer Vergrößerung des ortsfesten Rauschens bemerkbar machen würde. Das Substrat kann von einer dunkel eingefärbten Polyesterfolie der Dicke 180 $\mu$m bis 250 $\mu$m gebildet sein. Dadurch wird die Reflexion des Verstärkerfolienlichtes unterdrückt.

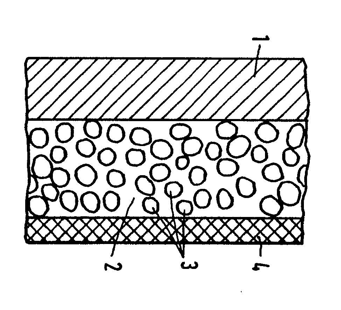

Die Erfindung ist nachfolgend anhand eines in der Zeichnung dargestellten Ausführungsbeispieles näher erläutert.

In der Zeichnung ist ein Substrat 1 dargestellt, auf dem ein in ein Bindemittel 2 eingebetteter Leuchtstoff 3 aufgebracht ist. Die Komponenten 2 und 3 sind durch einen Schutzfilm 4 vor widrigen chemischen und physikalischen Einflüssen abgedeckt.

Die mittlere Korngröße des Leuchtstoffes 3 liegt im Bereich zwischen 3,4 $\mu$m und 3,6 $\mu$m, wobei 5 % bis 15 %, vorzugsweise 10 % der Leuchtstoffkörner größer als 6,5 $\mu$m und 85 % bis 95 %, vorzugsweise 90 % größer als 2 $\mu$m sind. Dem Bindemittel 2 sind zum Zwecke der besseren Dispergierung 0,1 bis 0,2 Gewichtsprozent $SiO_2$-Partikel der Korngröße 10 bis 100 nm zugesetzt.

Das Substrat 1 ist von einer blau oder schwarz eingefärbten Polyesterfolie der Dicke 180 $\mu$m bis 250 $\mu$m gebildet.

## Patentansprüche

1. Röntgenverstärkerfolie mit einem Substrat (1), auf dem ein in einem Bindemittel (2) eingebetteter Leuchtstoff (3) der Zusammensetzung $Gd_2O_2S{:}Tb$ aufgebracht ist und die von einem Schutzfilm (4) abgedeckt ist, **dadurch gekennzeichnet,** daß die mittlere Korngröße des Leuchtstoffes (3) zwischen 3,4 $\mu$m und 3,6 $\mu$m liegt, wobei 5 % bis 15 %, vorzugsweise 10 % der Leuchtstoffkörner größer als 6,5 $\mu$m und 85 % bis 95 %, vorzugsweise 90 % größer als 2 $\mu$m sind.

2. Röntgenverstärkerfolie nach Anspruch 1, **dadurch gekennzeichnet,** daß das Bindemittel (2) 0,1 bis 0,2 Gewichtsprozent $SiO_2$-Partikel der Korngröße 10 bis 100 nm enthält.

3. Röntgenverstärkerfolie nach Anspruch 1 oder 2, **dadurch gekennzeichnet,** daß das Substrat (1) von einer dunkel eingefärbten Polyesterfolie der Dicke 180 $\mu$m bis 250 $\mu$m gebildet ist.

## Claims

1. x-ray intensifier film with a substrate (1), on which there is applied a fluorescent substance (3) of the composition $Gd_2O_2S{:}Tb$ embedded in binding means (2), and which is covered by a protective film (4), characterized in that the average grain size of the fluorescent substance (3) lies between 3.4 $\mu$m and 3.6 $\mu$m, whereby 5 % to 15 %, preferably 10 % of the fluorescent substance grains are larger than 6.5 $\mu$m and 85 % to 95 %, preferably 90 % are larger than 2 $\mu$m.

2. X-ray intensifier film according to claim 1, characterized in that the binding means (2) contains 0.1 to 0.2 per cent by weight $SiO_2$-particles of the grain size 10 to 100 nm.

3. X-ray intensifier film according to claim 1 or 2, characterized in that the substrate (1) is formed by a darkly inked polyester film of the thickness 180 $\mu$m to 250 $\mu$m.

## Revendications

1. Écran renforçateur radiologique comportant un substrat (1), sur lequel est déposée une substance luminescente (3) noyée dans un liant (2) et possédant la composition $Gd_2O_2S$:Tb, cet écran renforçateur étant recouvert par une pellicule protectrice (4), caractérisé par le fait que la taille moyenne des grains de la substance luminescente (3) est comprise entre 3,4 $\mu$m et 3,6 $\mu$m, 5 % à 15 % et de préférence 10 % des grains de la substance luminescente ayant une taille supérieure à 6,5 $\mu$m et 85 % à 95 % et de préférence 90 % ayant une taille supérieure à 2 $\mu$m.

2. Écran renforçateur radiologique suivant la revendication 5, caractérisé par le fait que le liant (2) contient 0,1 à 0,2 pour cent en poids de particules de $SiO_2$ ayant des grains d'une taille comprise entre 10 et 100 nm.

3. Écran renforçateur radiologique suivant la revendication 1 ou 2, caractérisé par le fait que le substrat (1) est formé par une feuille de polyester de couleur sombre, possédant une épaisseur comprise entre 180 $\mu$m et 200 $\mu$m.